# EUROPÄISCHE PATENTSCHRIFT

(11) **EP 1 310 394 B1**
(45) Veröffentlichungstag und Bekanntmachung des Hinweises auf die Patenterteilung: **02.04.2008**
(21) Anmeldenummer: 02024653.4
(22) Anmeldetag: 05.11.2002
(51) Int. Cl.: B60J 7/00

(54) **Flächiges Glaselement für ein Fahrzeugdach und Verfahren zum Herstellen desselben**
Flat glass element for a vehicle roof and method for manufacturing the same
Elément de vitre plat pour un toit de véhicule et son procédé de fabrication

(30) Priorität: 12.11.2001 DE 10155170
(43) Veröffentlichungstag der Anmeldung: 14.05.2003
(73) Patentinhaber: Webasto AG, 82131 Stockdorf (DE)
(72) Erfinder: Hahn, Roland, 82110 Germering (DE); Hertel, Johann, 82061 Neuried (DE)
(74) Vertreter: Konnerth, Dieter Hans

(56) Entgegenhaltungen:
- DE-C- 4 403 175
- DE-C- 19 538 552
- DE-C- 19 937 220
- US-A- 5 451 091
- US-A- 6 056 352
- US-A1- 2001 019 217

## Beschreibung

Die vorliegende Erfindung betrifft ein flächiges Glaselement für ein Fahrzeugdach und ein Verfahren zum Herstellen desselben.

Aus der DE 34 42 616 A1 ist ein Glasdeckel für ein Schiebehebedach bekannt, an dessen Unterseite im seitlichen Randbereich eine streifenförmige Seitenblende befestigt ist. Die Blende ist dabei als flexibler Streifen aus Gummi oder Kunststoff gefertigt.

Aus der DE 39 32 207 A1 ist ein Glasdeckel für ein Schiebedach bekannt, welcher in seinem seitlichen Randbereich an der Unterseite mit einem Faltenbalg versehen ist, wobei der Faltenbalg mittels einer mechanischen Verbindung an der Deckelunterseite befestigt ist.

Ferner ist es allgemein bekannt, Glasdeckel im Umfangsrandbereich mit einer Umschäumung zu versehen, um beispielsweise ein Dichtungselement oder ein Deckelinnenblech an der Glasscheibe zu befestigen.

Die DE 43 21 915 C1 offenbart ein gattungsgemäßes Glaselement, das als Glasdeckel eines Schiebehebedaches gebildet ist und mit einer seitlichen streifenförmigen Seitenblende versehen ist, die an einer einen Einfassrahmen bildenden Umschäumung des Glasdeckels angebracht ist und sich nach unten erstreckt. Ein Deckelträger ist ebenfalls an der Umschäumung des Einfassrahmens unterseitig angebracht, der einen sich nach unten erstreckenden Schenkel aufweist, der mit einem vorderen Schwenklager schwenkbeweglich verbunden ist, jedoch keine Blende darstellt.

Es ist Aufgabe der vorliegenden Erfindung, ein flächiges Glaselement für ein Fahrzeugdach zu schaffen, welches auf möglichst einfache Weise zusätzlich zu einer Randumschäumung mit einem Blendenelement an seiner Unterseite versehen ist. Ferner ist es Aufgabe der Erfindung, ein entsprechendes Herstellungsverfahren für ein solches Glaselement zu schaffen.

Diese Aufgabe wird erfindungsgemäß gelöst durch ein Glaselement mit den Merkmalen des Anspruchs 1 sowie durch ein Herstellungsverfahren mit den Merkmalen des Anspruchs 8.

Bei der erfindungsgemäßen Lösung ist vorteilhaft, daß dadurch, daß das Blendenelement unmittelbar an der Unterseite der Glasscheibe angeschäumt oder angespritzt wird, Kosten eingespart werden können, da kein zusätzliches Einzelteil notwendig ist und somit auch die Montage dieses Zusatzteils entfällt, wodurch Arbeitskosten und Werkzeug- und Einzelteilkosten eingespart werden können. Ferner kann eine verbesserte Optik erzielt werden, da Einzelteiltoleranzen, insbesondere Wölbungstoleranzen, entfallen.

Bevorzugte Ausgestaltungen der Erfindung ergeben sich aus den Unteransprüchen.

Das Blendenelement kann sowohl eine feste Blende wie auch ein Faltenbalg sein, die bzw. der angeschäumt oder angespritzt ist. Um jeweils optimale Bauteileigenschaften zu erhalten, können die Materialien für die Umschäumung des Umfangsrandes bzw. Randbereichsumschäumung und das Blendenelement unterschiedlich sein. Vorzugsweise ist die Randbereichsumschäumung aus Polyurethan (PUR) oder aus PVC hergestellt.

In einer bevorzugten Ausgestaltung ist das Blendenelement umlaufend ausgebildet, so dass ein Sichtschutz bezüglich des Fahrzeuginnenraums für den gesamten Umfangsrandbereich der Glasscheibe bereitgestellt werden kann. Alternativ kann das Blendenelement nur in Teilbereichen oder Teilabschnitten ausgebildet sein, um einen Sichtschutz bezüglich des Fahrzeuginnenraums nur für einen Teil oder für mehrere Teile des Umfangsrandbereichs der Glasscheibe zu erzielen.

Ein derartiges Glaselement kann als Festelement oder als verstellbarer Deckel ausgebildet sein.

Bei dem erfindungsgemäßen Verfahren zum Herstellen eines flächigen Glaselements für ein Fahrzeugdach wird eine Glasscheibe in ihrem Umfangsrandbereich mit einer Umschäumung versehen und unmittelbar an der dem Fahrzeuginnenraum zugewandten Unterseite der Glasscheibe wird ein sich nach unten erstreckendes Blendenelement angeformt bzw. angeschäumt oder angespritzt. Dabei kann die Anformung des Blendenelements in einem zweiten Schäumkreislauf gleichzeitig mit der Umschäumung des Umfangsrandbereichs oder in einem separaten Arbeitsgang nach der Umschäumung des Umfangsrandbereichs erfolgen.

Im folgenden wird die Erfindung anhand der beigefügten Zeichnung beispielhaft näher erläutert. Dabei zeigt:
- Fig. 1: eine schematische Längsschnittansicht eines erfindungsgemäßen Glaselements im montierten Zustand; und
- Fig. 2: eine schematische perspektivische Ansicht der Unterseite des Glas-elements von Fig. 1.

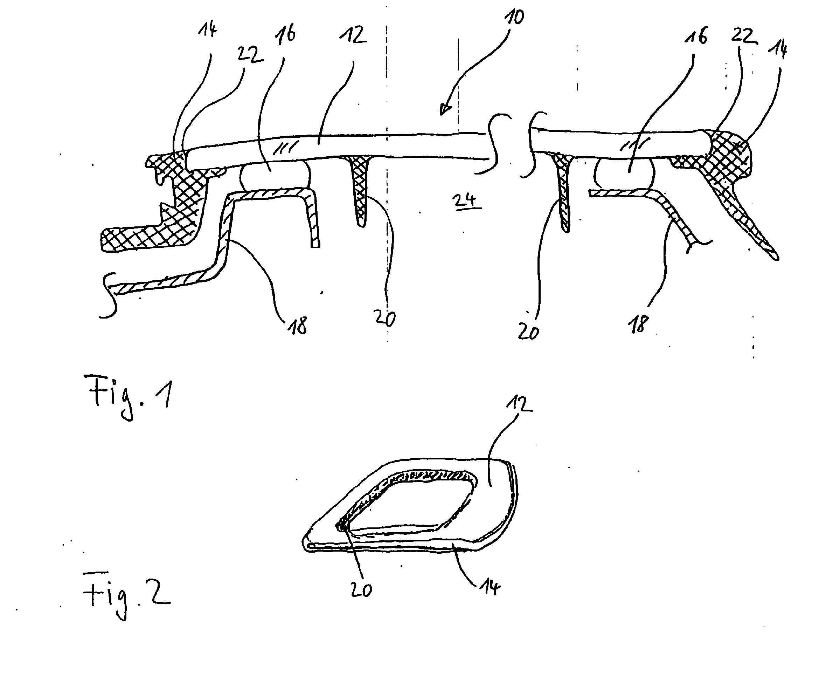

Fig.1 zeigt eine Längsschnittansicht eines von einem Glasfestelement 10 gebildeten Fahrzeugdaches. Das Glasfestelement 10 umfaßt eine Glasscheibe 12, die in ihrem Umfangsrandbereich mit einer Umschäumung 14 versehen ist, die je nach Dachtyp unterschiedliche Funktionen erfüllen kann. Beispielsweise kann die Umschäumung 14 als Dichtungsträger oder als Träger von Befestigungs- und/oder Verstärkungselementen dienen. Die Umschäumung 14 kann auch selbst eine Dichtungsfunktion oder eine Abdeckfunktion erfüllen. Wenn es sich bei dem Glaselement 10 nicht um ein Festelement, sondern um ein verstellbares Element, beispielsweise einen Deckel eines Schiebedaches, Schiebehebedaches oder Spoilerdaches, handelt, dient die Umschäumung 14 als Träger für das Dekkelinnenblech.

Als Umschäumungsmaterial kann beispielsweise PUR oder PVC verwendet werden.

Bei der in Fig.1 gezeigten Ausführungsform ist die umlaufende Außenkante der Glasscheibe 12 so umschäumt, daß das obere Ende der Umschäumung bündig mit der Scheibenoberseite ist ("Flush-Design"). Die Glasscheibe 12 ist im Randbereich an ihrer Unterseite mittels einer Kleberaupe 16 mit einem karosseriefesten Dachrahmen 18 verklebt. Bei einem verstellbaren Glaselement wäre dieses über ein von der Umschäumung 14 gehaltenes Befestigungselement (Deckelinnenblech) mit einer entsprechenden Verstellmechanik verbunden.

An der Unterseite der Glasscheibe 12 ist innenliegend bezüglich der Umschäumung 14 und der Kleberaupe 16 eine Blende 20 angeformt, welche gemäß Fig.2 umlaufend ausgebildet ist, d.h. die Blende 20 verläuft im wesentlichen parallel zu der Umfangskante 22, um die Kleberaupe 16 und den Dachrahmen 18 bezüglich des Fahrzeuginnenraums 24 zu verdecken. Wenn das Glaselement 10 verstellbar ausgebildet ist, dient die Blende 20 dazu, die Deckelbefestigung bzw. die Verstellmechanik bezüglich des Fahrzeuginnenraums 24 zu verdecken.

Alternativ kann die Blende 20 so ausgebildet sein, daß sie nicht vollständig umläuft, sondern nur in Teilbereichen ausgebildet ist, um nur einen Teil des Umfangsrandbereichs des Glaselements 10 bezüglich des Fahrzeuginnenraums 24 zu verdecken.

Die Blende 20 kann angeschäumt oder angespritzt sein. Dabei kann das Anformen der Blende 20 gleichzeitig mit dem Umschäumen der Umfangskante 22 in einem zweiten Schäumkreislauf erfolgen, oder die Blende 20 kann in einem separaten Arbeitsgang nachträglich angeformt werden. Die Materialien für die Umschäumung 14 des Umfangsrandbereichs und die Blende 20 können unabhängig voneinander gewählt sein, z.B. in Zweikomponententechnik. So kann beispielsweise die Umschäumung 14 aus PUR oder PVC bestehen, während die Blende 20 aus einem anderen Kunststoff oder weicherem Schaum besteht. Die Blende 20 kann vollständig aus angeschäumtem bzw. angespritztem Material bestehen oder sie kann in das Anschäumungs-/Anspritzungsmaterial eingelegte Komponenten umfassen. -

Die Blende 20 kann alternativ beispielsweise auch von einem Faltenbalg gebildet werden, der an die Unterseite der Glasscheibe 12 angeformt (angeschäumt oder angespritzt) ist. Diese Ausführungsform ist zweckmäßig, wenn das Glaselement 10 als verstellbarer Deckel ausgebildet ist, da sich dann, beispielsweise während eines Ausstellvorgangs, der Abstand zwischen Scheibenunterseite und dem Dachrahmen 18 ändern kann, so daß eine in ihrer Höhenausdehnung flexible Blendenanordnung wünschenswert ist.

### Bezugszeichenliste

- 10: Glaselement
- 12: Glasscheibe
- 14: Randbereichsumschäumung von 12
- 16: Kleberaupe
- 18: Dachrahmen
- 20: Blende
- 22: Umfangskante von 12
- 24: Fahrzeuginnenraum

## Patentansprüche

1. Flächiges Glaselement (10) für ein Fahrzeugdach, mit einer Glasscheibe (12), die in ihrem Umfangsrandbereich (22) mit einer Umschäumung (14) versehen ist und ein sich nach unten erstreckendes Blendenelement (20) aufweist,
**dadurch gekennzeichnet,**
**dass** das Blendenelement (20) unmittelbar an der dem Fahrzeuginnenraum (24) zugewandten Unterseite der Glasscheibe (12) angeschäumt oder angespritzt ist.

2. Glaselement nach Anspruch 1,
**dadurch gekennzeichnet, dass** das Blendenelement eine feste Blende (20) oder ein Faltenbalg ist.

3. Glaselement nach einem der vorhergehenden Ansprüche,
**dadurch gekennzeichnet, dass** die Materialien für die Randbereichsumschäumung (14) und das Blendenelement (20) unterschiedlich sind.

4. Glaselement nach einem der vorhergehenden Ansprüche,
**dadurch gekennzeichnet, dass** die Randbereichsumschäumung (14) aus Polyurethan (PUR) oder PVC besteht.

5. Glaselement nach einem der vorhergehenden Ansprüche,
**dadurch gekennzeichnet, dass** das Blendenelement (20) umlaufend ausgebildet ist, um einen Sichtschutz bezüglich des Fahrzeuginnenraums (24) für den gesamten Umfangsrandbereich (14) der Glasscheibe (12) zu erzielen.

6. Glaselement nach einem der Ansprüche 1 bis 4,
**dadurch gekennzeichnet, dass** das Blendenelement (20) nur in Teilbereichen ausgebildet ist, um einen Sichtschutz bezüglich des Fahrzeuginnenraums (24) für einen Teil des Umfangsrandbereichs (14) der Glasscheibe (12) zu erzielen.

7. Glaselement nach einem der vorhergehenden Ansprüche,
**dadurch gekennzeichnet, dass** das Glaselement als Festelement (10) oder als verstellbarer Deckel ausgebildet ist.

8. Verfahren zum Herstellen eines flächigen Glaselements (10) für ein Fahrzeugdach, wobei eine Glasscheibe (12) in ihrem Umfangsrandbereich (22) mit einer Umschäumung (14) versehen wird,
**dadurch gekennzeichnet,**
**dass** unmittelbar an der dem Fahrzeuginnenraum (24) zugewandten Unterseite der Glasscheibe (12) ein sich nach unten erstreckendes Blendenelement (20) angeschäumt oder angespritzt wird.

9. Verfahren nach Anspruch 8,
**dadurch gekennzeichnet, dass** die Anformung des Blendenelements (20) in einem zweiten Schäumkreislauf gleichzeitig mit der Umschäumung des Umfangsrandbereichs (22) erfolgt.

10. Verfahren nach Anspruch 8,
**dadurch gekennzeichnet, dass** die Anformung des Blendenelements (20) in einem separaten Arbeitsgang nach der Umschäumung des Umfangsrandbereichs (22) erfolgt.

## Claims

1. Flat glass element (10) for a vehicle roof, having a sheet of glass (12) which, in its circumferential edge region (22), is provided with peripheral foam (14) and has a screening element (20) extending downwards, **characterized in that** the screening element (20) is foamed or injection-moulded directly on to the underside of the sheet of glass (12) facing the vehicle interior (24).

2. Glass element according to Claim 1, **characterized in that** the screening element is a fixed screen (20) or a bellows.

3. Glass element according to one of the preceding claims, **characterized in that** the materials for the edge region peripheral foam (14) and the screening element (20) are different.

4. Glass element according to one of the preceding claims, **characterized in that** the edge region peripheral foam (14) consists of polyurethane (PU) or PVC.

5. Glass element according to one of the preceding claims, **characterized in that** the screening element (20) is of circumferential design in order to achieve a screen with respect to the vehicle interior (24) for the entire circumferential edge region (14) of the sheet of glass (12).

6. Glass element according to one of Claims 1 to 4, **characterized in that** the screening element (20) is formed only in subregions, in order to achieve a screen with respect to the vehicle interior (24) for part of the circumferential edge region (14) of the sheet of glass (12).

7. Glass element according to one of the preceding claims, **characterized in that** the glass element is formed as a fixed element (10) or an adjustable panel.

8. Method for manufacturing a flat glass element (10) for a vehicle roof, a sheet of glass (12) being provided with peripheral foam (14) in its circumferential edge region (22), **characterized in that** a screening element (20) that extends downwards is foamed or injection-moulded directly on to the underside of the glass element (10) facing the vehicle interior (24).

9. Method according to Claim 8, **characterized in that** the screening element (20) is moulded on in a second foam cycle at the same time as the peripheral covering of the circumferential edge region (22) with foam.

10. Method according to Claim 8, **characterized in that** the screening element (20) is moulded on in a separate operation after the peripheral covering of the circumferential edge region (22) with foam.

## Revendications

1. Élément de vitre plat (10) pour un toit de véhicule, avec une vitre (12) qui est pourvue dans sa zone de bord périphérique (22) d'une garniture en mousse (14) et qui présente un élément d'écran (20) s'étendant vers le bas,
**caractérisé en ce**
**que** l'élément d'écran (20) est moussé ou moulé par injection directement sur la face inférieure de la vitre (12) dirigée vers l'intérieur du véhicule (24).

2. Élément de vitre selon la revendication 1,
**caractérisé en ce que** l'élément d'écran est un panneau (20) fixe ou un soufflet.

3. Élément de vitre selon l'une quelconque des revendications précédentes,
**caractérisé en ce que** les matériaux pour la garniture en mousse de la zone de bord (14) et l'élément d'écran (20) sont différents.

4. Élément de vitre selon l'une quelconque des revendications précédentes,
**caractérisé en ce que** la garniture en mousse de la zone de bord (14) est en polyuréthane (PUR) ou en PVC.

5. Élément de vitre selon l'une quelconque des revendications précédentes,
**caractérisé en ce que** l'élément d'écran (20) est réalisé de manière circulaire afin de protéger l'intérieur du véhicule (24) des regards pour toute la zone de bord périphérique (14) de la vitre (12).

6. Élément de vitre selon l'une quelconque des revendications 1 à 4,
**caractérisé en ce que** l'élément d'écran (20) n'est réalisé que dans des zones partielles afin de protéger l'intérieur du véhicule (24) des regards pour une partie de la zone de bord périphérique (14) de la vitre (12).

7. Élément de vitre selon l'une quelconque des revendications précédentes,
**caractérisé en ce que** l'élément de vitre est réalisé comme un élément fixe (10) ou comme un couvercle réglable.

8. Procédé de fabrication d'un élément de vitre (10) plat pour un toit de véhicule, une vitre (12) étant pourvue dans sa zone de bord périphérique (22) d'une garniture en mousse (14),
**caractérisé en ce**
**qu'**un élément d'écran (20) s'étendant vers le bas est moussé ou moulé par injection directement sur la face inférieure de la vitre (12) dirigée vers l'intérieur du véhicule (24).

9. Procédé selon la revendication 8,
**caractérisé en ce que** l'élément d'écran (20) est formé simultanément avec la garniture en mousse de la zone de bord périphérique (22) dans un second cycle de moussage.

10. Procédé selon la revendication 8,
**caractérisé en ce que** l'élément d'écran (20) est formé au cours d'une opération séparée après la garniture en mousse de la zone de bord périphérique (22).
